# EUROPÄISCHE PATENTSCHRIFT

(11) **EP 0 541 607 B1**
(45) Veröffentlichungstag und Bekanntmachung des Hinweises auf die Patenterteilung: **01.03.1995**
(21) Anmeldenummer: 91913353.8
(22) Anmeldetag: 25.07.1991
(51) Int. Cl.: C08G 18/08, C08G 18/10, C09J 175/04

(54) **HERSTELLUNG VON WÄSSRIGEN POLYURETHANDISPERSIONEN**
PROCESS FOR PRODUCING AQUEOUS POLYURETHANE DISPERSIONS
PRODUCTION DE DISPERSIONS AQUEUSES DE POLYURETHANNE

(30) Priorität: 02.08.1990 DE 4024567
(43) Veröffentlichungstag der Anmeldung: 19.05.1993
(73) Patentinhaber: BASF Aktiengesellschaft, 67063 Ludwigshafen (DE)
(72) Erfinder: FISCH, Herbert, D-6700 Ludwigshafen (DE); MAEMPEL, Lothar, D-6835 Bruehl (DE)
(86) Internationale Anmeldenummer: EP9101391
(87) Internationale Veröffentlichungsnummer: WO9202566

(56) Entgegenhaltungen:
- EP-A- 0 000 548
- EP-A- 0 103 174
- EP-A- 0 272 566
- EP-A- 0 382 052
- EP-A- 0 404 371
- Angewandte Makromolekulare Chemie Bd 89, 1981, Seiten 133-165
- Kunststoff-Handbuch Band 7,, 1983, Seite 591
- Adhäsion , Bd 3 (1984), Seiten 7-12

## Beschreibung

Die vorliegende Erfindung betrifft wäßrige Polyurethandispersionen, erhältlich durch Umsetzung von (a) Dihydroxylverbindungen mit einem Molekulargewicht von 500 bis 5 000, (b) Diisocyanaten und gegebenenfalls (c) Kettenverlängerungsmitteln mit mindestens zwei gegenüber Isocyanatgruppen reaktionsfähigen Wasserstoffatomen und einem Molekulargewicht unter 300, welche keine Salzgruppen aufweisen, in der Schmelze oder in Gegenwart eines bei Normaldruck unter 100°C siedenden, in jedem Verhältnis mit Wasser mischbaren, gegenüber Isocyanatgruppen inerten organischen polaren Lösungsmittels (L) zu einem Prepolymeren mit endständigen Isocyanatgruppen, anschließende Umsetzung des Prepolymeren mit (d) Salzen von aliphatischen Aminocarbon- oder -sulfonsäuren bzw. tertiären Ammoniumsalzen, welche mindestens ein gegenüber Isocyanat reaktionsfähiges Wasserstoffatom enthalten, wobei das molare Verhältnis der Komponenten a:b:(c+d) im Bereich von 1:2:1 bis 1:14:13 liegt und Dispergieren des erhaltenen Polyurethans in Wasser, dadurch gekennzeichnet, daß man vor dem Dispergieren des erhaltenen Polyurethans in Wasser 5 bis 60 Gew.-Teile, bezogen auf 100 Gew.-Teile des Polyurethans, eines Polymeren (P) ausgewählt aus Poylvinylacetat, Polyvinylchlorid, Polymethylmethacrylat, Polyamid, Polyethylenoxid, Polypropylenoxid, Polytetrahydrofuran oder deren Copolymere mit zwei endständigen Hydroxylgruppen, Polyesterharz, insbesondere Polyesterdiol, salzgruppenfreies Polyurethan oder einem Gemisch aus mindestens zweiten dieser Stoffe, das in einem bei Normaldruck unter 100°C siedenden, mit Wasser mischbaren, gegenüber Isocyanat inerten Lösungsmittels (L') gelöst ist, zumischt.

Die Erfindung betrifft des weiteren die Verwendung der Verfahrensprodukte, d.h. der - elastomeren - Polyurethane als Klebstoff oder als Beschichtungsmaterial.

In diesem Zusammenhang ist zunächst festzustellen, daß es bekannt ist, die betroffenen Polyurethan-Elastomere als Klebstoffe einzusetzen; vgl. hierzu z.B. Kunststoff-Handbuch, Band 7, Juli 1983, Seiten 588 bis 590.

Es ist auch bekannt, daß bei den bislang als Klebstoff bekannten Polyurethanen die geringe Löslichkeit in geeigneten Lösungsmitteln (Aceton, Methylethylketon) von Nachteil ist, so daß beim Kleben große Mengen an Lösungsmittel abgedunstet werden müssen. Es wird daher seit längerem versucht, Elastomere in Form von wäßrigen Dispersionen zu verarbeiten; vgl. hierzu z.B. das oben zitierte Kunststoff-Handbuch, Seiten 591 ff. Die Stabilisierung der wäßrigen Dispersionen erfolgt dabei gewöhnlich durch eingebaute ionische Gruppen. Nachteilig an diesen Dispersionen ist, daß man beim Verkleben relative hohe (80°C oder höher) Aktivierungstemperaturen benötigt, um den getrockneten Klebefilm in die für das Verkleben notwendige Konsistenz zu bringen, bzw. daß die bei einer gegebenen Aktivierungstemperatur erhaltenen Anfangshaftfestigkeiten des Systems zu niedrig liegen. Unter Anfangshaftfestigkeiten versteht man dabei die unmittelbar nach kurzem Aktivieren und Zusammenpressen der zu verklebenden Flächen gemessenen Klebefestigkeiten.

Weiterhin ist bekannt, daß bei Polyurethanklebern, die aus organischer Lösung verarbeitet werden, die Anfangshaftfestigkeit durch Zusatz bestimmter Harze zu verbessern ist; vgl. hierzu z.B. B. Kujawa-Pencek et al., Adhäsion, (1984) 3, S. 7 bis 12.

Hinweise auf ein verbessertes Verfahren zur Herstellung von Polyurethan-Dispersionen finden sich nicht.

Die Herstellung wäßriger Polyurethandispersionen kann auf verschiedenen Wegen erfolgen; vgl. hierzu etwa D. Dieterich, Progress in Organic Coatings, Band 9, 1981, Seiten 281-340. Relativ einfach ist das sogenannte "Acetonverfahren". Dabei wird ein Polyurethanionomer in mehreren Schritten in acetonischer Lösung hergestellt und anschließend durch Zugabe von Wasser in eine wäßrige Dispersion überführt. Das noch im Wasser gelöste Aceton wird im allgemeinen zum Schluß im Vakuum abdestilliert.

Aus D. Dieterich, angewandte makromolekulare Chemie. 89, 1981, Seiten 133-165, Kunststoff-Handbuch, Band 7, Juli 1983. Seite 591 und B. Kujawa-Pencek et al., Adhäsion (1984) 3, Seiten 7 bis 12 ist bekannt, zu wäßrigen Polyurethandispersionen in Wasser dispergierte Polymere zuzusetzen. Diese Dispersionen sind jedoch häufig instabil. Die Produkte neigen zu Adhäsionsbruch bzw. mangelnder Haftfestigkeit.

In DE-A 3903538 wird die Herstellung von wäßrigen Polyurethandispersionen unter Zusatz von Lösungen von Phenolformaldehyd- oder Epichlorhydrin-Bisphenol-A-Kondensaten beschrieben.

Aufgabe war es demnach, wäßrige Polyurethandispersionen herzustellen, die eine gute Haftfestigkeit auch am Anfang bzw. nach Wärmebehandlung zeigen und gut verarbeitbar sind.

Demgemäß wurde die oben genannte wäßrige Polyurethandispersion gefunden.

Weiterhin wurde die Verwendung der wäßrigen Polyurethandispersionen als Klebstoff oder als Beschichtungsmaterial gefunden.

Bevorzugte Ausführungsformen der Erfindung sind den Unteransprüchen zu entnehmen.

Das Polymere (P) wird bevorzugt in Mengen von 10 bis 50 Gew.-Teilen, bezogen auf 100 Gew.-Teile des Polyurethans, eingesetzt. Es handelt sich um Polyvinylacetat, Polyvinylchlorid und Polymethylmethacrylat, oder um Polyamid, Polyethylenoxid, Polypropylenoxid, Polytetrahydrofuran oder deren Copolymere mit zwei endständigen Hydroxylgruppen, Polyesterharz, insbesondere Polyesterdiol und salzgruppenfreies Polyurethan. Es können auch Gemische von mindestens zweien dieser Polymeren eingesetzt werden.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrylsäure-, Fumarsäure- oder Maleinsäureester mit C₁- bis C₈-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew.-% an Comonomeren wie Ethylen oder Vinylacetat enthalten, verstanden. Ihr K-Wert (25°C, Cyclohexanon, DIN 53 726) sollte zwischen 45 und 55 liegen.

Als Polymethylmethacrylat setzt der Fachmann üblicherweise Homopolymerisate des Methylmethacrylats oder seine Copolymerisate mit bis zu 10 Gew.-%, bezogen auf das Copolymerisat, an Vinylacetat, Acrylsäureestern von C₁- bis C₈-Alkanolen oder Methacrylsäureestern mit C₂- bis C₈-Alkanolen ein. Ihr Schmelzindex MFI, bestimmt nach DIN 53 735 (230°C/3,8 kg) liegt im allgemeinen zwischen 0,1 und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben einen K-Wert von 65 bis 80, gemessen in H₂SO₄ bei 25°C nach DIN 53 727. Es handelt sich üblicherweise um Polymere, die sich von Lactamen mit 7 bis 13 Ringgliedern wie ε-Caprolactam, ε-Capryllactam oder ε-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612) . Geeignete Dicarbonsäuren sind beispielsweise Alkandicarbonsäuren mit 5 bis 12, insbesondere 6 bis 10 Kohlenstoffatomen sowie Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% 4,4'-Dicyclohexylmethylendiamin und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267 oder EP-A-129 195 und EP-A-129 196.

Polyethylenoxid, Polypropylenoxid oder Polytetrahydofuran oder deren Copolymere mit zwei endständigen Hydroxylgruppen werden in bekannter Weise hergestellt durch im allgemeinen anionische Polyaddition, s. beispielsweise N.G. Gaylord, High Polymers, Bd. 13, New York 1963, Part I. Die Polyetherdiole haben im allgemeinen ein Molekulargewicht von 300 bis 3000, was einem K-Wert in DMF bei 25°C nach DIN 53 726 vom 25 bis 60 entspricht. Bevorzugte Molekulargewichte liegen zwischen 800 und 2200, entsprechend einem K-Wert von 20 bis 50.

Als Polyesterharze werden monomerfreie ungesättigte Polyesterharze bevorzugt. Diese sind bekannte Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und ggf. zusätzliche Reste einwertiger Carbonsäuren oder einwertiger Alkohole enthalten. Als Ausgangsstoff seien genannt: Maleinsäure, Fumarsäure, Phthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Monomerfrei in diesem Zusammenhang bedeutet, daß diese sogenannten UP-Harze nicht in zur Vernetzung geeigneten Monomeren wie Styrol gelöst sind.

Als Polyesterdiole sind Kondensationsprodukte, die zwei endständige OH-Gruppen aufweisen, aus Dicarbonsäuren mit Adipinsäure oder Isopthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62 und DE 1 268 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die nach üblichen Verfahren (KunststoffHandbuch, Karl-Hanser-Verlag, Band 7, 1966) hergestellt werden. Geeignete Ausgangsstoffe sind weiter unten im einzelnen aufgeführt. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Das Lösungsmittel (L'), das bei Normaldruck einen Siedepunkt von unter 100°C hat, ist üblicherweise mit Wasser in jedem Verhältnis mischbar. Es handelt sich um ein gegen Isocyanat inertes Lösungsmittel. In Frage kommen Aceton, Tetrahydrofuran oder Methylethylketon. Bevorzugt ist (L') identisch mit (L). Die Konzentration des Polymeren (P) im Lösungsmittel (L') ist nicht kritisch. Sie kann zwischen 5 und 60, bevorzugt 20 bis 55 Gew.-%, bezogen auf die Lösung, liegen.

Zum erfindungsgemäßen Verfahren selbst ist im einzelnen das folgende zu bemerken:
Die Herstellung der wäßrigen Polyurethandispersionen folgt in an sich bekannter Weise durch Umsetzung von (a) Dihydroxylverbindungen mit einem Molekulargewicht von 500 bis 5000, (b) Diisocyanaten und gegebenenfalls (c) Kettenverlängerungsmitteln mit mindestens 2 gegenüber Isocyanatgruppen reaktionsfähigen Wasserstoffatomen und einem Molekulargewicht unter 300 in der Schmelze oder bevorzugt in Gegenwart eines unter 100°C siedenden, mit Wasser mischbaren, inerten organischen Lösungsmittels (L) zu einem Prepolymeren mit endständigen Isocyanatgruppen, anschließende Umsetzung des - ggf. mit (weiterem) Lösungsmittel (L) verdünnten - Prepolymeren mit (d) - ggf. in Wasser gelösten - üblicherweise waserlöslichen Salzen von aliphatischen Aminocarbon- oder -sulfonsäuren, die im allgemeinen mindestens ein, vorzugsweise zwei gegen Isocyanatgruppen reaktionsfähige Wasserstoffatome, beispielsweise in Form von NH- oder OH-Gruppen, aufweisen.

Anstelle der Aminocarbon- oder -sulfonsäure, die zu anionischen Polyurethananionomeren führen, können auch tertiäre Amine bzw. deren Salze eingesetzt werden. Sie enthalten im allgemeinen eine, vorzugsweise zwei Gruppen mit mindestens einem gegen Isocyanatgruppen reaktionsfähigen Wasserstoffatom, beispielsweise in Form von NH- oder OH-Gruppen. Diese kationischen Salze führen zu kationischen Polyurethanionomeren. Anschließend wird das so hergestellte salzgruppenhaltige Ionomere, das bevorzugt im Lösungsmittel (L) gelöst ist, mit einer Lösung des Polymeren (P) in einem unter 100°C siedenden Lösungsmittel (L') versetzt, die erhaltene Mischung durch Zugabe von Wasser und ggf. Rühren dispergiert, und - ggf. - das oder die Lösungsmittel (L) und (L') destillativ entfernt.

Man erhält im allgemeinen emulgatorfreie Polyurethandispersionen. Eine bevorzugte Verfahrensvariante besteht darin, daß man das Polymere (P), daß in (L') gelöst ist, dem Prepolymeren vor Zugabe der Salze (d) zumischt. Es versteht sich von selbst, daß das Polymere (P) bei dieser Variante frei von aktivem Wasserstoff sein muß, der mit den eingesetzten Isocyanaten reagieren könnte.

Geeignete Dihydroxylverbindungen (a) mit einem Molekulargewicht von 500 bis 5000 sind die bekannten Polyester, Polyether, Polythioether, Polylactone, Polyacetale, Polycarbonate und Polyesteramide mit 2 endständigen Hydroxylgruppen. Bevorzugt werden solche Dihydroxylverbindungen, deren Molekulargewichtsbereich zwischen 750 und 3000 liegt. Selbstverständlich können auch Gemische dieser höhermolekularen Dihydroxylverbindungen untereinander eingesetzt werden.

Geeignete aliphatische, cycloaliphatische und aromatische Diisocyanate (b) sind z.B. 1,4-Butandiiosocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluoldiisocyanat, sowie deren technische Isomerengemische. Das molare Verhältnis der (cyclo)aliphatischen zu den aromatischen Diisocyanaten liegt zweckmäßig im Bereich von 1 : 1 bis 1 : 6.

Geeignete Kettenverlängerungsmittel (c) mit mindestens zwei gegenüber Isocyanatgruppen reaktionsfähigen Wasserstoffatomen mit einem Molekulargewicht unter 300 ohne Salzgruppen sind die üblichen Glykole, wie Ethylenglykol, Propylenglykol, Butandiol-1,3 und -1,4, Hexandiol, Neopentylglykol, Cyclohexandiol, 2,2-Bis-(4-hydroxycyclohexyl)-propan, 2,2-Bis-(4-hydroxyethoxyphenyl)-propan, Diethylenglykol oder Dipropylenglykol, Diamine, wie Ethylendiamin, Piperazin, Isophorondiamin, Toluoldiamin, Diaminodiphenylmethan wie Aminoalkohole, Hydrazin und gegebenenfalls auch Wasser.

Geeignete wasserlösliche Salze (d) von aliphatischen Aminocarbon- oder -sulfonsäuren sind z.B. in der DE-A 20 34 479 oder DE-A 19 54 090 beschrieben. Es sind dies vorzugsweise die Alkalisalze, insbesondere die Natrium- oder Kaliumsalze, der Additionsprodukte von niederen aliphatischen diprimären Diaminen, z.B. Ethylendiamin, an ungesättigte Carbonsäuren, wie (Meth)Acrylsäure, Crotonsäure oder Maleinsäure, sowie Alkalisalze des Lysins. Allgemein bevorzugt werden Verbindungen mit zwei an verschiedene Stickstoffatome gebundenen Wasserstoffatomen sowie mit nur einer Salzgruppe im Molekül, also Verbindungen, die das Produkt wohl dispergierbar, aber nicht allzu hydrophil machen und die außerdem zur Kettenverlängerung geeignet sind. Auch die Alkalisalze der Additionsprodukte von Propansulfon an aliphatische diprimäre Diamine sind gut geeignet. Sie werden im allgemeinen in solchen Mengen angewandt, daß das erhaltene Polyurethan 0,02 bis 1 Gew.% salzartige Gruppen enthält.

Geeignete tertiäre Amine bzw. ihre Salze sind tertiäre Amine, die zusätzlich im Molekül noch 2 Hydroxyl- oder 2 primäre oder sekundäre Aminogruppen enthalten.

Die Isocyanatgruppen und die mit Isocyanat reaktionsfähigen Hydroxyl- und Aminogruppen sollen in ungefähr äquivalenten molaren Verhältnissen eingesetzt werden. Das Verhältnis der Zahl der Isocyanatgruppen zur Zahl der insgesamt im Isocyanat reaktionsfähigen Wasserstoffatome soll im Bereich zwischen 0,9 und 1,2, bevorzugt zwischen 1,0 und 1,1 liegen.

Die Dihydroxylverbindungen mit einem Molekulargewicht von 500 bis 5000 (a), Diisocyanate (b), Kettenverlängerungsmittel mit einem Molekulargewicht unter 300 (c) und wasserlöslichen Salze aliphatischer Aminocarbonsäuren oder Aminosulfonsäuren bzw. tertiäre Ammoniumsalze (d) werden in solchen molaren Verhältnissen eingesetzt, daß das Verhältnis der Komponente (a) zu der Summe der Diisocyanate (b) sowie zu der Summe der Kettenverlängerungsmittel (c) und der Komponente (d) im Bereich von a : b : (c + d) = 1 : 2 : 1 bis 1 : 14 : 13 liegt. Besonders vorteilhaft ist der Bereich von 1 : 4 : 3 bis 1 : 10 : 9.

Zur Beschleunigung der Reaktion der Diisocyanate können die üblichen und bekannten Katalysatoren, wie Dibutylzinndilaurat, Zinn-(II)-octoat oder 1,4-Diazabicyclo-(2,2-2)-octan, mitverwendet werden.

Die Herstellung der wäßrigen Polyurethandispersionen erfolgt in an sich bekannter Weise durch Umsetzung der Dihydroxylverbindungen mit einen Molekulargewicht von 500 bis 5000 mit den Diisocyanaten und gegebenenfalls den Kettenverlängerungsmitteln mit einem Molekulargewicht unter 300 ohne Salzgruppen in der Schmelze oder gegebenenfalls in Gegenwart eines unter 100°C siedenden und mit Wasser mischbaren, inerten organischen Lösungsmittels, gegebenenfalls unter Druck, zu einem Prepolymeren mit endständigen Isocyanatgruppen.

Die erfindungsgemäß zu verwendenden aromatischen und (cyclo)aliphatischen Diisocyanate können dabei entweder im Gemisch miteinander oder auch in der genannten Reihenfolge nacheinander mit den Dihydroxylverbindungen und den Kettenverlängerungsmitteln umgesetzt werden. Auf Grund der unterschiedlichen Reaktionsfähigkeit der beiden Diisocyanate ist es häufig ausreichend, die Diisocyanate im Gemisch miteinander einzusetzen. Werden sie nacheinander mit den Dihydroxylverbindungen und den Kettenverlängerungsmitteln umgesetzt, dann ist es vorteilhaft, zuerst das aromatische und dann das (cyclo)aliphatische Diisocyanat einzusetzen, um sicherzustellen, daß das Reaktionsprodukt mittelständige Segmente aus aromatischen Diisocyanat und Kettenverlängerungsmittel sowie entständige (cyclo)aliphatische Isocyanatgruppen aufweist. Bei der stufenweisen Umsetzung der beiden Diisocyanate ist es nicht wesentlich, vor der Zugabe des (cyclo)aliphatischen Diisocyanats das aromatische Diisocyanat vollständig umzusetzen, sondern das (cyclo)aliphatische Diisocyanat kann häufig bereits zu einem Zeitpunkt zugesetzt werden, zu dem erst ein Teil des aromatischen Diisocyanats reagiert hat.

Das so erhaltene Polyurethanprepolymere mit endständigen aliphatischen oder cycloaliphatischen Isocyanatgruppen wird gegebenenfalls mit einem mit Wasser mischbaren, unter 100°C siedenden und gegenüber Isocyanatgruppen inerten Lösungsmittel weiter verdünnt. Ihm können im allgemeinen bei einer Temperatur zwischen 20 und 50°C das Polymere (P) gelöst in (L') und die wasserlöslichen Salze von aliphatischen Aminocarbon- oder -sulfonsauren oder die tertiären Ammoniumsalze zugesetzt werden. Gegebenenfalls können die Verbindungen (d) in Form einer wäßrigen Lösung zugegeben werden. Die Umsetzung dieser Salze mit den Isocyanatgruppen erfolgt spontan und führt bevorzugt zur Kettenverlängerung.

Zur Lösung des so erhaltenen Polyurethans wird im allgemeinen eine Lösung des Polymeren (P) in einem Lösungsmittel (L') gegeben.

Als Lösungsmittel (L) kommen gegenüber Isocyanat inerte polare Lösungsmittel mit Siedepunkten bei Normaldruck von unter 100°C in Frage, die mit Wasser in jedem Verhältnis mischbar sind, z.B. Aceton, Tetrahydofuran oder Methylethylketon.

In die so erhaltene Mischung wird am Schluß Wasser eingerührt und ggf. das organische Lösungsmittel (L) bzw. (L') destillativ entfernt. Man erhält dabei feinteilige stabile Dispersionen, die durch Eindampfen ggf. aufkonzentriert werden können. Im allgemeinen werden lösungsmittelfreie Latices mit einem Feststoffgehalt von bis zu 60 Gew.-%, bevorzugt von 30 bis 50 Gew.-%, hergestellt.

Die wäßrigen Polyurethandispersionen zeichnen sich durch eine hohe Haftfestigkeit, insbesondere am Anfang, Wärmestandfestigkeit und hohe Endfestigkeit aus. Sie können als Klebstoffe in einfacher Weise nach gängigen Methoden verarbeitet werden, da sie eine offene Zeit von 6 bis 12 Stunden haben. Die abgelüfteten Filme der Dispersionen weisen eine auch für Kontaktkleber günstige offene Zeit auf. Die Polyurethandispersionen ermöglichen die Einbringung von verschiedenen Polymeren, insbesondere Polyamide, die auch für den Einsatz im Lackmittelsektor entscheidende Vorteile bringen. So können Polyamide in den beschriebenen Polyurethandispersionen als wäßrige Systeme eingesetzt und verarbeitet werden und bieten so Vorteile gegenüber lösungsmittelhaltigen Lacken.

Die in den nachfolgenden Beispielen verwendeten Symbole haben die nachstehend wiedergegebenen Bedeutungen:
- ADS: = Adipinsäure
- B 14: = Butandiol-1,4
- DBTL: = Dibutylzinndilaurat
- TDI: = Toluylendiisocyanat
- HDI: = Hexamethylendiisocyanat
- PUD: = Na-Salz des Michaeladukts aus Acrylsäure und Ethylendiamin (als salzgruppenhaltiges Kettenverlängerungsmittel)
- IPDA: = Isophorondiamin
- IPS: = Isophthalsäure
Alle Prozent-Angaben in den Beispielen beziehen sich, wenn nicht anders angegeben, auf das Gewicht.

### Beispiele

### Beispiel 1

### Ausgangsstoffe:

500 g Polyesterdiol ADS/B14 (OH-Zahl: 47)
0,07 g DBTL
103 g Aceton I
26 g TDI
25,1 g HDI
524 g Aceton II
16,7 g PUD-Salz
243,6 g monomerfreies Polyesterharz aus 50 Gew.-% Fumarsäure, 25 Gew.-% Neopentylglykol und 25 Gew.-% Butandiol-1,4, (Erweichungspunkt 82-85°C), Viskosität bei 150°C: 2500-2700 mPas)
243 g Aceton III
1214 g Wasser

### Verfahrensweise:

Zur Mischung aus entwässertem Polyesterdiol, Aceton I und Katalysator wird das TDI zugegeben, nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,7 %. Bei 50°C wird mit PUD kettenverlängert. Nach 5 Minuten wird das Polyesterharz, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 42,6 %.

### Beispiel 2

### Ausgangsstoffe:

500 g Polyesterdiol ADS/B14 (OH-Zahl: 47)
0,09 g DBTL
134 g Aceton I
26 g TDI
25,5 g HDI
540 g Aceton II
16,7 g PUD-Salz
245 g monomerfreies Polyesterharz aus 50 Gew.-% Fumarsäure, 25 Gew.-% Neopentylglykol und 25 Gew.-% Butandiol-1,4, (Erweichungspunkt 82-85°C), Viskosität bei 150°C: 3500-3800 mPas)
245 g Aceton III
1210 g Wasser

### Verfahrensweise:

Zur Mischung aus entwässertem Polyesterdiol, Aceton I und Katalysator wird das TDI zugegeben, nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,68 %. Bei 50°C wird mit PUD kettenverlängert. Nach 5 Minuten wird das Polyesterharz, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 42,3 %.

### Beispiel 3

### Ausgangsstoffe:

500 g Polyesterdiol ADS(35 Gew.-%)/B14(24,2 Gew.-%)/IPS(40,8 Gew.-%) (OH-Zahl: 118)
0,09 g DBTL
134,5 g Aceton I
25,5 g TDI
25 g HDI
538,2 g Aceton II
16,7 g PUD-Salz
245 g monomerfreies Polyesterharz des Beispiels 2
245 g Aceton III
1217 g Wasser

### Verfahrensweise:

Zur Mischung aus entwässertem Polyesterdiol, Aceton I und Katalysator wird das TDI zugegeben, nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,83 %. Bei 50°C wird mit PUD kettenverlängert. Nach 5 Minuten wird das Polyesterharz, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 40,6 %.

### Beispiel 4

### Ausgangsstoffe:

500 g Polyesterdiol ADS/B14 (OH-Zahl: 47)
0,09 g DBTL
134 g Aceton I
25,5 g TDI
25 g HDI
540,3 g Aceton II
16,7 g PUD-Salz
245 g Polyvinylacetat (K-Wert in Cyclohexanon bei T=25°C: 44)
232 g Aceton III
1217 g Wasser

### Verfahrensweise:

Zur Mischung aus entwässertem Polyesterdiol, Aceton I und Katalysator wird das TDI zugegeben, nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,64 %. Bei 50°C wird mit PUD kettenverlängert. Nach 5 Minuten wird das Polyvinylacetat, gelöst in Aceton III zugemischt und 15 Minuten bei 50°C gerührt. Danach wird mit Wasser dispergiert und anschließend das Aceton abdestilliert.

Man erhält eine feinteilige Polyurethan-Dispersion mit einem Feststoffgehalt von 41 %.

### Beispiel 5

### Ausgangsstoffe:

500 g Polyesterdiol ADS/B14 (OH-Zahl: 47)
0,09 g DBTL
134 g Aceton I
25,5 g TDI
25 g HDI
540,3 g Aceton II
16,7 g PUD-Salz
245 g Polyvinylacetat (K-Wert in Cyclohexanon bei T=25°C: 47)
232 g Aceton III
1217 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,60 %. Bei 50°C wird mit PUD kettenverlängert. Nach 5 Minuten wird das Polyvinylacetat, gelöst in Aceton III zugemischt und 15 Minuten bei 50°C gerührt. Danach wird innerhalb 90 Minuten mit Wasser dispergiert und anschließend das Aceton abdestilliert.

Man erhält eine feinteilige Polyurethan-Dispersion mit einem Feststoffgehalt von 41 %.

### Beispiel 6

### Ausgangsstoffe:

500 g Polyesterdiol ADS/B14 (OH-Zahl: 47)
0,09 g DBTL
134 g Aceton I
25,5 g TDI
25 g HDI
532,1 g Aceton II
16,7 g PUD-Salz
245 g Polyvinylacetat (K-Wert in Cyclohexanon bei T=25°C: 55)
288 g Aceton III
1208 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,72 %. Bei 50°C wird mit PUD kettenverlängert. Nach 5 Minuten wird die acetonische Polyvinylacetatlösung (Aceton III) zugemischt und 15 Minuten bei 50°C gerührt. Danach wird innerhalb 90 Minuten mit Wasser dispergiert und anschließend das Aceton abdestilliert.

Die entstandene feinteilige Polyurethan-Dispersion hat einen Feststoffgehalt von 39,7 %.

### Beispiel 7

### Ausgangsstoffe:

500 g Polyesterdiol ADS/B14 (OH-Zahl: 47)
0,07 g DBTL
134,5 g Aceton I
25,5 g TDI
25 g HDI
538,2 g Aceton II
16,2 g PUD-Salz
244 g Polytetrahydrofuran (K-Wert in DMF bei T=25°C: 31)
244 g Aceton III
1217 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,61 %. Bei 50°C wird mit PUD kettenverlängert. Nach 5 Minuten wird die acetonische Polyetherlösung (Aceton III) zugemischt und 15 Minuten bei 50°C gerührt. Danach wird innerhalb 90 Minuten mit Wasser dispergiert und anschließend das Aceton abdestilliert.

Die entstandene feinteilige Polyurethan-Dispersion hat einen Feststoffgehalt von 40 %.

### Beispiel 8

### Ausgangsstoffe:

500 g Polyesterdiol ADS/B14 (OH-Zahl: 47)
0,07 g DBTL
134,5 g Aceton I
25,5 g TDI
25 g HDI
538,2 g Aceton II
16,2 g PUD-Salz
244 g Polyethylenglykol (K-Wert in DMF bei T=25°C: 28)
244 g Aceton III
1217 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,69 %. Bei 50°C wird mit PUD kettenverlängert. Nach 5 Minuten wird die acetonische Polyetherlösung (Aceton III) zugemischt und 15 Minuten bei 50°C gerührt. Danach wird innerhalb 90 Minuten mit Wasser dispergiert und anschließend das Aceton abdestilliert.

Die entstandene feinteilige stabile Polyurethan-Dispersion mit einem Feststoffgehalt von 40,6 %.

### Beispiel 9

### Ausgangsstoffe:

500 g Polyesterdiol ADS/B14 (OH-Zahl: 47)
0,07 g DBTL
103 g Aceton I
26 g TDI
25,1 g HDI
524 g Aceton II
16,7 g PUD-Salz
243,6 g Polyesterdiol (K-Wert in DMF, T=25°C: 36)
243 g Aceton III
1214 g Wasser

### Verfahrensweise:

Zur Mischung aus entwässertem Polyesterdiol, Aceton I und Katalysator wird das TDI zugegeben, nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,7 %. Bei 50°C wird mit PUD kettenverlängert. Nach 5 Minuten wird der Polyester, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 42,6 %.

### Beispiel 10

### Ausgangsstoffe:

500 g Polyesterdiol ADS/B14 (OH-Zahl: 47)
0,09 g DBTL
134 g Aceton I
25,5 g TDI
25 g HDI
540,3 g Aceton II
16,7 g PUD-Salz
245 g Polyurethan aus 30,7 Gew.-% Adipinsäure, 2,6 Gew.-% Hexandiol(1,6) und 66,7 Gew.-% MDI, (K-Wert in DMF bei 25°C: 54)
245 g Aceton III
1217 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,6 %. Bei 50°C wird mit PUD kettenverlängert. Nach 5 Minuten wird das Polyurethan, gelöst in Aceton III zugemischt und 15 Minuten bei 50°C gerührt. Danach wird innerhalb 90 Minuten mit Wasser dispergiert und anschließend das Aceton abdestilliert.

Die entstehende feinteilige Polyurethan-Dispersion hat einen Feststoffgehalt von 41 %.

### Beispiel 11

### Ausgangsstoffe:

500 g Polyesterdiol ADS/B14 (OH-Zahl: 47)
0,09 g DBTL
134 g Aceton I
25,5 g TDI
25 g HDI
540,3 g Aceton II
16,7 g PUD-Salz
245 g Polyurethan (Kondensationsprodukt aus Roh-MDI und Polypropylendiol, K-Wert in DMF bei 25°C: 46)
245 g Aceton III
1220 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,67 %. Bei 50°C wird mit PUD kettenverlängert. Nach 5 Minuten wird das Polyurethanharz, gelöst in Aceton III zugemischt und 15 Minuten bei 50°C gerührt. Danach wird innerhalb 90 Minuten mit Wasser dispergiert und anschließend das Aceton abdestilliert.

Die entstehende feinteilige Polyurethan-Dispersion hat einen Feststoffgehalt von 41 %.

### Beispiel 12

### Ausgangsstoffe:

525 g Polyesterdiol ADS/B14 (OH-Zahl: 47)
0,13 g DBTL
140 g Aceton I
24,4 g TDI
23,9 g HDI
560 g Aceton II
18,4 g PUD-Salz
251 g Polymethylmethacrylat (MFI 230°C/3,8 kg:1,1)
251 g Aceton III
1220 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,66 %. Bei 50°C wird mit PUD kettenverlängert. Nach 5 Minuten wird das PMMA, gelöst in Aceton III zugemischt und 15 Minuten bei 50°C gerührt. Danach wird innerhalb 90 Minuten mit Wasser dispergiert und anschließend das Aceton abdestilliert.

Die entstehende feinteilige Polyurethan-Dispersion hat einen Feststoffgehalt von 39,2 %.

### Beispiel 13

### Ausgangsstoffe:

500 g Polyesterdiol ADS/B14 (OH-Zahl: 47)
0,13 g DBTL
140 g Aceton I
24,4 g TDI
23,9 g HDI
560 g Aceton II
18,4 g PUD-Salz
245 g Polyurethan (Kondensationsprodukt aus Roh-MDI und Polypropylendiol, K-Wert in DMF bei 25°C: 46)
245 g Aceton III
1225 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,66 %. In die Prepolymerlösung wird das Polyurethan, gelöst in Aceton III gegeben und 10 Minuten bei 50°C eingerührt. Danach wird bei 50°C mit PUD kettenverlängert. Nach einer Reaktionszeit von 5 Minuten wird innerhalb von 90 Minuten mit Wasser dispergiert und anschließend das Aceton abdestilliert.

Die entstehende feinteilige Polyurethan-Dispersion hat einen Feststoffgehalt von 41,3 %.

### Beispiel 14

### Ausgangsstoffe:

500 g Polyesterdiol ADS/B14 (OH-Zahl: 47)
0,09 g DBTL
134 g Aceton I
25,5 g TDI
25 g HDI
532,1 g Aceton II
16,7 g PUD-Salz
245 g Polyvinylacetat (K-Wert in Cyclohexanon bei 25°C: 55)
288 g Aceton III
1208 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,69 %. In die Prepolymerlösung wird das Polyurethan, gelöst in Aceton III gegeben und 10 Minuten bei 50°C eingerührt. Danach wird bei 50°C mit PUD kettenverlängert. Nach einer Reaktionszeit von 5 Minuten wird innerhalb von 90 Minuten mit Wasser dispergiert und anschließend das Aceton abdestilliert.

Die entstehende feinteilige Polyurethan-Dispersion hat einen Feststoffgehalt von 41,3 %.

### Beispiel 15

### Ausgangsstoffe:

500 g Polyesterdiol ADS/B14 (OH-Zahl: 47)
0,07 g DBTL
103 g Aceton I
26 g TDI
25,1 g HDI
524 g Aceton II
16,7 g PUD-Salz
243,6 g monomerfreies Polyesterharz aus 50 Gew.-% Fumarsäure, 25 Gew.-% Neopentylglykol und 25 Gew.-% Butandiol-1,4, (Erweichungspunkt 82-85°C), Viskosität bei 150°C: 3500-3800 mPas)
243 g Aceton III
1214 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,68 %. In die Prepolymerlösung wird das Polyesterharz, gelöst in Aceton III gegeben und 10 Minuten bei 50°C eingerührt. Danach wird bei 50°C mit PUD kettenverlängert. Nach einer Reaktionszeit von 5 Minuten wird innerhalb von 90 Minuten mit Wasser dispergiert und anschließend das Aceton abdestilliert.

Die entstehende feinteilige Polyurethan-Dispersion hat einen Feststoffgehalt von 40,2 %.

### Beispiel 16

### Ausgangsstoffe:

360 g Polyesterdiol ADS/B14 (OH-Zahl: 47)
0,07 g DBTL
97 g Aceton I
20,8 g TDI
20,4 g HDI
587,5 g Aceton II
17,2 g PUD-Salz
413,7 g monomerfreies Polyesterharz aus 50 Gew.-% Fumarsäure, 25 Gew.-% Neopentylglykol und 25 Gew.-% Butandiol-1,4, (Erweichungspunkt 82-85°C), Viskosität bei 150°C: 3500-3800 mPas)
415 g Aceton III
1241 g Wasser
Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,66 %. Bei 50°C wird mit PUD kettenverlängert. Nach 5 Minuten wird das Polyesterharz, gelöst in Aceton III zugemischt und 15 Minuten bei 50°C gerührt. Danach wird innerhalb von 90 Minuten mit Wasser dispergiert und anschließend das Aceton abdestilliert.

Die entstehende feinteilige Polyurethan-Dispersion hat einen Feststoffgehalt von 39,2 %.

### Beispiel 17

### Ausgangsstoffe:

360 g Polyesterdiol ADS/B14 (OH-Zahl: 47)
0,07 g DBTL
97 g Aceton I
17,4 g TDI
17 g HDI
376 g Aceton II
6,9 g PUD-Salz
3,4 g IDPA
169 g monomerfreies Polyesterharz aus 50 Gew.-% Fumarsäure, 25 Gew.-% Neopentylglykol, 25 Gew.-% Butandiol-1,4 (Erweichungspunkt 82-85°C), Viskosität bei 150°C: 3500-3800 mPas)
169 g Aceton III
381 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,66 %. Bei 50°C wird mit PUD kettenverlängert. Nach 5 Minuten wird das Polyesterharz, gelöst in Aceton III zugemischt und 15 Minuten bei 50°C gerührt. Danach wird innerhalb 90 Minuten mit Wasser dispergiert und anschließend das Aceton abdestilliert.

Die entstehende feinteilige Polyurethan-Dispersion hat einen Feststoffgehalt von 59,2 %.

### Beispiel 18

### Ausgangsstoffe:

360 g Polyesterdiol ADS/B14 (OH-Zahl: 47)
0,07 g DBTL
94 g Aceton I
17,4 g TDI
17 g HDI
376 g Aceton II
10 g PUD-Salz
169,2 g Polyvinylacetat (K-Wert in Cyclohexanon bei T=25°C: 44)
169 g Aceton III
565 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 90 Minuten umgesetzt. Nach Zulauf des Aceton II hat die erhaltene Polymerlösung einen NCO-Gehalt von 0,60 %. Bei 50°C wird mit PUD kettenverlängert. Nach 5 Minuten wird das Polyvinylacetat, gelöst in Aceton III zugemischt und 15 Minuten bei 50°C gerührt. Danach wird innerhalb von 90 Minuten mit Wasser dispergiert und anschließend das Aceton abdestilliert.

Die entstehende feinteilige Polyurethan-Dispersion hat einen Feststoffgehalt von 50,1 %.

### Beispiel 19

### Ausgangsstoffe:

500 g Polyesterdiol ADS/B14 (OH-Zahl: 47)
0,07 g DBTL
103 g Aceton I
26 g TDI
25,1 g HDI
524 g Aceton II
16,7 g PUD-Salz
243,6 g PVC-Homopolymerisat (K-Wert in Cyclohexanon: 46)
243 g Aceton III
1214 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,7 %. Bei 50°C wird mit PUD kettenverlängert. Nach 5 Minuten wird das Polyvinylchlorid, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 42,6 %.

### Beispiel 20

### Ausgangsstoffe:

500 g Polyesterdiol ADS/B14 (OH-Zahl: 47)
0,09 g DBTL
134 g Aceton I
26 g TDI
25,5 g HDI
540 g Aceton II
16,7 g PUD-Salz
245 g Polyamid aus 34,1 Gew.-% Adipinsäure, 17,3 Gew.-% ε-Caprolactam, 17,4 Gew.-% Hexamethylendiamin, 31,2 Gew.-% 4,4'-Dicyclohexylmethylendiamin
245 g Aceton III
1210 g Wasser

### Verfahrensweise:

Zur Mischung aus entwässertem Polyesterdiol, Aceton I und Katalysator wird das TDI zugegeben. Nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,68 %. Bei 50°C wird mit PUD kettenverlängert. Nach 5 Minuten wird das Polyamid, gelöst in Aceton III zugemischt und 15 Minuten bei 50°C gerührt. Danach wird mit Wasser dispergiert und anschließend das Aceton abdestilliert.

Man erhält eine feinteilige stabile Polyurethan-Dispersion mit einem Feststoffgehalt von 42,3 %.

### Beispiel 21 (Vergleich)

### Ausgangsstoffe:

700 g Polyesterdiol ADS/B14 (OH-Zahl: 47)
0,12 g DBTL
190 g Aceton I
31 g TDI
28,5 g HDI
744,8 g Aceton II
39,5 g PUD-Salz
2756,2 g Wasser

### Verfahrensweise:

Zur Mischung aus entwässertem Polyesterol, Aceton I und Katalysator wird das TDI zugegeben. Nach 1 Stunde Reaktionszeit bei 60°C wird HDI zugegeben und weitere 2 Stunden umgesetzt. Nach Zulauf des Aceton II hat die erhaltene Polymerlösung einen NCO-Gehalt von 0,68 %. Bei 50°C wird mit PUD kettenverlängert. Danach wird mit Wasser dispergiert und anschließend das Aceton abdestilliert.

Man erhält eine feinteilige stabile Polyurethan-Dispersion mit einem Feststoffgehalt von 21,9 %.

Zu 500 g dieser Dispersion wurde eine wäßrige Polyvinylacetatdispersion (50 %ig) so zugegeben, daß ein Gesamtfeststoffgehalt von 40 % erhalten wurde. Bei der Zugabe tritt Koagulation ein. Klebtechnische Daten konnten deshalb nicht gemessen werden.

### Beispiel 22 (Vergleich)

Zu der nach Beispiel 21 hergestellten Polyurethandispersion wurde eine wäßrige PVC-Dispersion so zugegeben, daß man nach der Vermischung einen Feststoffgehalt von 40 Gew.-% erhält. Die Lichtdurchlässigkeit der Mischung verschlechtert sich, Dispersion bleibt jedoch stabil.

### Klebtechnische Eigenschaften der hergestellten Dispersionen

Die Dispersionen wurden mit 5 Gew.-%, bezogen auf ihren Feststoff, pyrogener Kieselsäure angedickt, mit einem Rakel mit 1 mm-Zahnung auf Styrol-Butadiengummi (SBR1-Gummi mit einer shore-A-Härte von 90 (s. DIN 16 909)) aufgerakelt und 60 Minuten bei Raumtemperatur getrocknet.

### Testmethoden:

a) Die Schälfestigkeit wurde sofort und nach 5 Tagen Lagerung bei Raumtemperatur in N/mm gemessen.
b) Die Wäremstandfestigkeit wurde an Teststreifen mit 30 mm Breite gemessen, die auf 60 mm Länge verklebt waren. Nach Temperung von 1 Stunde bei 50°C wurden die Teststreifen bei 50°C jeweils 10 Minuten mit 5, 10, 15, 20, 25 und 30 N in aufsteigender Reihenfolge belastet. Hielt die Verklebung, so wurde die aufsteigende Belastung beginnend mit 5 N bei 60°C wiederholt. Angegeben sind jeweils die Temperatur (°C) und die Belastung (N), bei der eine Öffnung der Verklebung von mehr als 50 mm erkennbar war.
c) Schälfestigkeit wie a), jedoch nach einer einmaligen Aufheizung der Verklebung durch IR-Strahlung auf 80°C im Verlauf von ca. 4 Sekunden (Blitzaktivierung).
d) Wärmestandfestigkeit wie b), jedoch nach Blitzaktivierung der Verklebung (s. c).

| Ergebnisse | | | | |
|---|---|---|---|---|
| Beispiel | a) | b) | c) | d) |
| 1 | 0,9/1,8 | 50/10 | 1,9/3,4 | 50/30 |
| 2 | 1,1/1,9 | 50/30 | 1,9/3,7 | 50/20 |
| 3 | 1,0/1,5 | 50/10 | 1,4/3,1 | 50/20 |
| 4 | 1,7/2,5 | 50/0 | 2,2/4,0 | 50/20 |
| 5 | 1,8/2,9 | 50/10 | 1,9/4,1 | 50/10 |
| 6 | 1,6/1,9 | 50/5 | 1,9/2,4 | 50/5 |
| 7 | - | - | 0,7/1,1 | 50/5 |
| 8 | 0,3/1,9 | 50/0 | 0,9/0,9 | 50/5 |
| 9 | 0,8/1,5 | 50/10 | 0,9/2,3 | 50/10 |
| 10 | 1,0/2,3 | 50/30 | 1,8/3,7 | 60/10 |
| 11 | 1,5/2,7 | 60/10 | 2,0/3,8 | 60/20 |
| 12 | 0,5/1,8 | 50/20 | 0,9/2,2 | 50/30 |
| 13 | 1,4/2,2 | 50/30 | 1,9/3,8 | 60/20 |
| 14 | 1,3/1,5 | 50/10 | 2,0/2,4 | 50/20 |
| 15 | 1,0/2,1 | 50/20 | 1,9/3,3 | 60/10 |
| 16 | 1,0/1,4 | 50/10 | 1,4/2,3 | 50/10 |
| 17 | 0,8/1,7 | 50/10 | 1,8/3,2 | 50/30 |
| 18 | 1,8/2,5 | 50/10 | 2,4/4,2 | 50/30 |
| 19 | 0,3/0,8 | 50/0 | 0,4/0,9 | 50/5 |
| 20 | 0,4/0,5 | 50/0 | 0,4/0,9 | 50/5 |
| 21 | - | - | - | - |
| 22 | keine Verklebung | | 0,2/0,3 | 50/0 |

## Patentansprüche

1. Wäßrige Polyurethandispersionen, erhältlich durch Umsetzung von (a) Dihydroxylverbindungen mit einem Molekulargewicht von 500 bis 5 000, (b) Diisocyanaten und gegebenenfalls (c) Kettenverlängerungsmitteln mit mindestens zwei gegenüber Isocyanatgruppen reaktionsfähigen Wasserstoffatomen und einem Molekulargewicht unter 300, welche keine Salzgruppen aufweisen, in der Schmelze oder in Gegenwart eines bei Normaldruck unter 100°C siedenden, in jedem Verhältnis mit Wasser mischbaren, gegenüber Isocyanatgruppen inerten organischen polaren Lösungsmittels (L) zu einem Prepolymeren mit endständigen Isocyanatgruppen, anschließende Umsetzung des Prepolymeren mit (d) Salzen von aliphatischen Aminocarbon- oder -sulfonsäuren bzw. tertiären Ammoniumsalzen, welche mindestens ein gegenüber Isocyanat reaktionsfähiges Wasserstoffatom enthalten, wobei das molare Verhältnis der Komponenten a:b:(c+d) im Bereich von 1:2:1 bis 1:14:13 liegt und Dispergieren des erhaltenen Polyurethans in Wasser, dadurch gekennzeichnet, daß man vor dem Dispergieren des erhaltenen Polyurethans in Wasser 5 bis 60 Gew.-Teile, bezogen auf 100 Gew.-Teile des Polyurethans, eines Polymeren (P) ausgewählt aus Poylvinylacetat, Polyvinylchlorid, Polymethylmethacrylat, Polyamid, Polyethylenoxid, Polypropylenoxid, Polytetrahydrofuran oder deren Copolymere mit zwei endständigen Hydroxylgruppen, Polyesterharz, insbesondere Polyesterdiol, salzgruppenfreies Polyurethan oder einem Gemisch aus mindestens zweiten dieser Stoffe, das in einem bei Normaldruck unter 100°C siedenden, mit Wasser mischbaren, gegenüber Isocyanat inerten Lösungsmittels (L') gelöst ist, zumischt.

2. Wäßrige Polyurethandispersion nach Anspruch 1, wobei das Polymere P vor Zufügen der Komponente (d) zugemischt wird.

3. Verfahren zur Herstellung eines wäßrigen Polyurethandispersion durch Umsetzung von (a) Dihydroxylverbindungen mit einem Molekulargewicht von 500 bis 5 000, (b) Diisocyanaten und gegebenenfalls (c) Kettenverlängerungsmitteln mit mindestens zwei gegenüber Isocyanatgruppen reacktionsfähigen Wasserstoffatomen und einem Molekulargewicht unter 300, welche keine Salzgruppen aufweisen, in der Schmelze oder in Gegenwart eines bei Normaldruck unter 100°C siedenden, in jedem Verhältnis mit Wasser mischbaren, gegenüber Isocyanatgruppen inerten organischen polaren Lösungsmittels (L) zu einem Prepolymeren mit endständigen Isocyanatgruppen, anschließende Umsetzung des Prepolymeren mit (d) Salzen von aliphatischen Aminocarbon- oder -sulfonsäuren bzw. tertiären Ammoniumsalzen, welche mindestens ein gegenüber Isocyanat reaktionsfähiges Wasserstoffatom enthalten, wobei das molare Verhältnis der Komponenten a:b:(c+d) im Bereich von 1:2:1 bis 1:14:13 liegt und Dispergieren des erhaltenen Polyurethans in Wasser, dadurch gekennzeichnet, daß man vor dem Dispergieren des erhaltenen Polyurethans in Wasser 5 bis 60 Gew.-Teile, bezogen auf 100 Gew.-Teile des Polyurethans, eines Polymeren (P) ausgewählt aus Poylvinylacetat, Polyvinylchlorid, Polymethylmethacrylat, Polyamid, Polyethylenoxid, Polypropylenoxid, Polytetrahydrofuran oder deren Copolymere mit zwei endständigen Hydroxylgruppen, Polyesterharz, insbesondere Polyesterdiol, salzgruppenfreies Polyurethan oder einem Gemisch aus mindestens zweiten dieser Stoffe, das in einem bei Normaldruck unter 100°C siedenden, mit Wasser mischbaren, gegenüber Isocyanat inerten Lösungsmittels (L') gelöst ist, zumischt

4. Verwendung der Polyurethandispersionen gemäß Anspruch 1 als Klebstoff.

5. Verwendung der Polyurethandispersionen gemäß Anspruch 1 als Beschichtungsmaterial.

## Claims

1. An aqueous polyurethane dispersion, obtainable by reacting (a) dihydroxy compounds having a molecular weight of from 500 to 5,000, (b) diisocyanates and, if required, (c) chain extenders having at least two hydrogen atoms which are reactive toward isocyanate groups and a molecular weight of less than 300 and containing no salt groups, in the melt or in the presence of an organic polar solvent (S) which boils below 100°C under atmospheric pressure, is inert toward isocyanate groups and can be mixed with water in any ratio, to give a prepolymer having terminal isocyanate groups, then reacting the prepolymer with (d) salts of aliphatic aminocarboxylic or aminosulfonic acids or tertiary ammonium salts which contain at least one hydrogen atom which is reactive towards isocyanate, the molar ratio of the components a:b:(c+d) being from 1:2:1 to 1:14:13, and dispersing the resulting polyurethane in water, wherein, before the polyurethane obtained is dispersed in water, from 5 to 60 parts by weight, based on 100 parts by weight of the polyurethane, of a polymer (P) which is selected from the group consisting of polyvinyl acetate, polyvinyl chloride, polymethyl methacrylate, polyamide, polyethylene oxide, polypropylene oxide, polytetrahydrofuran and copolymers thereof having two terminal hydroxyl groups, polyester resin, in particular polyesterdiol, polyurethane free of salt groups and a mixture of at least two of these substances and is dissolved in a water-miscible solvent (S') which boils below 100°C under atmospheric pressure and is inert toward isocyanate is admixed.

2. An aqueous polyurethane dispersion as claimed in claim 1, wherein the polymer (P) is admixed before the addition of the component (d).

3. A process for the preparation of an aqueous polyurethane dispersion by reacting (a) dihydroxy compounds having a molecular weight of from 500 to 5,000, (b) diisocyanates and, if required, (c) chain extenders having at least two hydrogen atoms which are reactive toward isocyanate groups and a molecular weight of less than 300 and containing no salt groups, in the melt or in the presence of an organic polar solvent (S) which boils below 100°C under atmospheric pressure, is inert toward isocyanate groups and can be mixed with water in any ratio, to give a prepolymer having terminal isocyanate groups, then reacting the prepolymer with (d) salts of aliphatic aminocarboxylic or aminosulfonic acids or tertiary ammonium salts which contain at least one hydrogen atom which is reactive towards isocyanate, the molar ratio of the components a:b:(c+d) being from 1:2:1 to 1:14:13, and dispersing the resulting polyurethane in water, wherein, before the polyurethane obtained is dispersed in water, from 5 to 60 parts by weight, based on 100 parts by weight of the polyurethane, of a polymer (P) which is selected from the group consisting of polyvinyl acetate, polyvinyl chloride, polymethyl methacrylate, polyamide, polyethylene oxide, polypropylene oxide, polytetrohydrafuran and copolymers thereof having two terminal hydroxyl groups, polyester resin, in particular polyesterdiol, polyurethane free of salt groups and a mixture of at least two of these substances and is dissolved in a water-miscible solvent (S') which boils below 100°C under atmospheric pressure and is inert toward isocyanate is admixed.

4. Use of a polyurethane dispersion as claimed in claim 1 as an adhesive.

5. Use of a polyurethane dispersion as claimed in claim 1 as a coating material.

## Revendications

1. Dispersions aqueuses de polyuréthanne, que l'on peut obtenir par la réaction (a) de composés dihydroxylés d'un poids moléculaire de 500 à 5.000, (b) de diisocyanates et éventuellement (c) d'agents d'allongement des chaînes comportant au moins deux atomes d'hydrogène susceptibles de réagir avec des radicaux isocyanate et d'un poids moléculaire inférieur à 300, qui ne présentent pas de radicaux sel, dans la masse fondue, ou en présence d'un solvant (L) polaire, organique, inerte vis-à-vis des radicaux isocyanate, miscible en toutes proportions à l'eau, bouillant en dessous de 100°C sous la pression normale, en un prépolymère avec des radicaux isocyanate terminaux, réaction subséquente du prépolymère avec (d) des sels d'acides aminocarboxyliques ou aminosulfoniques, aliphatiques, ou des sels d'ammonium tertiaires, qui contiennent au moins un atome d'hydrogène susceptible de réagir avec les isocyanates, où le rapport molaire des composants a:b:(c+d) se situe dans la plage de 1:2:1 à 1:14:13 et la dispersion du polyuréthanne obtenu dans de l'eau, caractérisées en ce que, préalablement à la dispersion du polyuréthanne obtenu dans de l'eau, on ajoute sous mélange 5 à 60 parties en poids, par rapport à 100 parties en poids du polyuréthanne, d'un polymère (P) choisi parmi le poly(acétate de vinyle), le poly(chlorure de vinyle), le poly(méthacrylate de méthyle), un polyamide, le poly(oxyde d'éthylène), le poly(oxyde de propylène), le polytétrahydrofuranne, ou des copolymères de ceux-ci avec des radicaux hydroxyle terminaux, une résine de polyester, plus particulièrement de polyesterdiol, un polyuréthanne dépourvu de radicaux sel, ou un mélange d'au moins deux de ces matières, lequel polymère est dissous dans un solvant (L') inerte vis-à-vis des isocyanates, miscible à l'eau, bouillant en dessous de 100°C à la pression normale.

2. Dispersion aqueuse de polyuréthanne suivant la revendication 1, caractérisée en ce que le polymère P est ajouté sous mélange avant l'addition du composant (d).

3. Procédé de préparation d'une dispersion aqueuse de polyuréthanne, caractérisé en ce que l'on peut obtenir par la réaction (a) de composés dihydroxylés d'un poids moléculaire de 500 à 5.000, (b) de diisocyanates et éventuellement (c) d'agents d' allongement des chaînes comportant au moins deux atomes d'hydrogène susceptibles de réagir avec des radicaux isocyanate et d'un poids moléculaire inférieur à 300, qui ne présentent pas de radicaux sel, dans la masse fondue, ou en présence d'un solvant polaire, organique, inerte vis-à-vis des radicaux isocyanate, miscible en toutes proportions à l'eau, bouillant en dessous de 100°C sous la pression normale (L) en un prépolymère avec des radicaux isocyanate terminaux, réaction subséquente du prépolymère avec (d) des sels d'acides aminocarboxyliques ou aminosulfoniques, aliphatiques, ou des sels d'ammonium tertiaires, qui contiennent au moins un atome d'hydrogène susceptible de réagir avec les isocyanates, où le rapport molaire des composants a:b:(c+d) se situe dans la plage de 1:2:1 à 1:14:13 et la dispersion du polyuréthanne obtenu dans de l'eau, caractérisé en ce que, préalablement à la dispersion du polyuréthanne obtenu dans de l'eau, on ajoute sous mélange 5 à 60 parties en poids, par rapport à 100 parties en poids du polyuréthanne, d'un polymère (P) choisi parmi le poly(acétate de vinyle), le poly(chlorure de vinyle), le poly(méthacrylate de méthyle), un polyamide, le poly(oxyde d'éthylène), le poly(oxyde de propylène), le polytétrahydrofuranne, ou des copolymères de ceux-ci avec des radicaux hydroxyle terminaux, une résine de polyester, plus particulièrement de polyesterdiol, un polyuréthanne dépourvu de radicaux sel, ou un mélange d'au moins deux de ces matières, lequel polymère est dissous dans un solvant inerte vis-à-vis des isocyanates, miscible à l'eau, bouillant en dessous de 100°C à la pression normale (L').

4. Utilisation des dispersions de polyuréthanne suivant la revendication 1 à titre de colles.

5. Utilisation des dispersions de polyuréthanne suivant la revendication 1 à titre de matériau de revêtement.
